# FASCICULE DE BREVET EUROPEEN

(11) **EP 1 045 363 B1**
(45) Date de publication et mention de la délivrance du brevet: **29.06.2005**
(21) Numéro de dépôt: 00870068.4
(22) Date de dépôt: 12.04.2000
(51) Int. Cl.: G09B 23/28, A61C 13/00

(54) **Procédé de réalisation de dents artificielles imitant les dents naturelles et dents obtenues**
Verfahren zum Herstellen künstlicher Zähne, die die natürlichen Zähne nachahmen und auf diese Weise erhaltene Zähne
Process for producing artificial teeth imitating natural teeth and teeth so obtained

(30) Priorité: 12.04.1999 BE 9900248
(43) Date de publication de la demande: 18.10.2000
(73) Titulaire: Simonis Plastic, 4430 Ans (BE)
(72) Inventeur: Melot, Charles, 5030 Gembloux (BE); Lepage, Jean-Philippe, 5100 Jambes (BE)
(74) Mandataire: Van Malderen, Joelle

(56) Documents cités:
- WO-A-97/34278
- FR-A- 2 723 240
- US-A- 5 773 794
- PATENT ABSTRACTS OF JAPAN vol. 1999, no. 08, 30 juin 1999 (1999-06-30) & JP 11 085009 A (HIRAI JUN), 30 mars 1999 (1999-03-30)
- PATENT ABSTRACTS OF JAPAN vol. 017, no. 707 (P-1667), 24 décembre 1993 (1993-12-24) & JP 05 241498 A (KANEBO LTD;OTHERS: 01), 21 septembre 1993 (1993-09-21)

## Description

### Objet de l'invention

La présente invention concerne un procédé de réalisation de dents artificielles imitant les dents naturelles. Ces dents artificielles peuvent être, comme les dents naturelles, des dents à une, deux ou trois racines.

L'invention se rapporte également aux produits obtenus par ledit procédé.

### Arrière-plan technologique

En vue de parfaire la formation de futurs dentistes, on utilisait autrefois pour l'apprentissage des techniques de dentisterie, des mâchoires munies de leurs dents naturelles, qui étaient notamment prélevées sur des cadavres.

Pour des raisons évidentes d'hygiène, on a proposé de travailler sur des mâchoires comprenant des dents artificielles imitant le mieux possible les dents naturelles.

Une utilisation supplémentaire de dents artificielles est de tester ou de faire la démonstration de nouvelles techniques de soin et/ou de nouveaux dispositifs de traitement ou d'hygiène dentaire.

Il est connu de réaliser uniquement une couronne artificielle afin de déjà permettre aux praticiens d'effectuer les manipulations les plus courantes telles que fraisage, obturation, détartrage, etc.

L'absence de dents complètes comportant des racines ne permet pas une simulation des soins d'endodontie et la pose de prothèses dans les situations rencontrées cliniquement.

### Etat de la technique

Le document FR-A-09409450 propose la réalisation de copies de dents en résine époxy transparente, en vue d'imiter les anatomies interne et externe des dents. Ces dents artificielles sont réalisées par moulage d'une partie radiculaire en disposant un ou plusieurs tuteurs métalliques coniques dans un moule. La partie coronaire est réalisée séparément par moulage également.

Après démoulage et extraction du ou des tuteurs, ces deux parties, respectivement radiculaire et coronaire, sont associées.

Le fait d'utiliser un ou des tuteurs métalliques devant être extraits pour réaliser des canaux, implique que ceux-ci doivent être rectilignes, ou coniques.

Il n'est donc pas envisageable par cette technique de proposer des canaux courbes ou présentant un diamètre qui se rétrécit et ensuite s'élargit au fur et à mesure que l'on descend vers l'extrémité de la racine.

En outre, il est difficilement envisageable d'adapter ce procédé à une production industrielle de telles dents artificielles.

### Buts de l'invention

La présente invention vise à proposer un procédé de réalisation de dents artificielles présentant une configuration très proche de celle des dents naturelles, et ce pour chaque type de dent (incisive, canine, prémolaire et molaire).

La présente invention vise en outre à proposer un procédé de réalisation de dents artificielles utilisant des matériaux dont les caractéristiques donnent des propriétés très proches des composants des dents naturelles.

La présente invention vise également à proposer des dents artificielles qui présentent des formes et dimensions, tant internes qu'externes, qui reproduisent autant que possible l'anatomie d'une dent naturelle.

La présente invention vise plus particulièrement à proposer la réalisation de dents artificielles qui présentent des canaux radiculaires dont la forme ne doit pas être nécessairement rectiligne mais peut être courbe et dont le diamètre peut varier au fur et à mesure que l'on s'enfonce dans la dent.

### Principaux éléments caractéristiques de l'invention

La présente invention se rapporte à un procédé de réalisation de dents artificielles imitant les dents naturelles, chaque dent comprenant une couronne et un élément radiculaire comprenant une, deux ou trois racines, chacune des racines comportant au moins un canal radiculaire, ledit procédé comprenant les étapes suivantes:
- réalisation d'une couronne par injection dans un moule d'une matière plastique présentant des caractéristiques élevées de résistance mécanique et de dureté,
- réalisation de l'élément radiculaire sous la forme d'au moins deux parties radiculaires présentant une surface de jonction incluant au moins une rainure destinée à réaliser un canal radiculaire, cette réalisation des différentes parties radiculaires étant effectuée par injection dans un moule d'un matériau, de préférence un matériau présentant des caractéristiques de transparence ou de translucidité à la lumière,
- assemblage et solidarisation des différentes parties radiculaires entre elles en vue d'obtenir l'élément radiculaire de la dent, et
- assemblage et solidarisation de la couronne avec ledit élément radiculaire.

La surface de jonction est de préférence un plan de jonction dans lequel sont disposées la ou les rainures qui, lors de l'assemblage, forment un canal radiculaire, mais une surface de jonction autre que celle d'un plan peut également être envisagée.

La solidarisation des différentes parties radiculaires s'effectue par soudage par émission d'ultrasons ou par soudage par émission de rayonnement laser.

On peut prévoir en outre le long de la ou des rainures destinées à créer le ou les canaux sur une des parties radiculaires, un surplus de matière formant un directeur d'énergie et sur l'autre partie radiculaire, une gorge en vue de favoriser le soudage des différentes parties radiculaires lors de l'assemblage en vue de la réalisation de l'élément radiculaire.

De manière avantageuse, la solidarisation de la couronne et de l'élément radiculaire est réalisée par collage, éventuellement accompagné d'une polymérisation par émission d'un rayonnement UV.

La présente invention se rapporte également à une dent artificielle imitant une dent naturelle comportant une couronne réalisée en un matériau présentant des caractéristiques élevées de dureté et de résistance mécanique et un élément radiculaire, de préférence transparent ou translucide à la lumière, composé d'au moins deux parties radiculaires solidarisées entre elles le long d'au moins une surface de jonction incluant au moins un canal radiculaire.

De manière avantageuse, la couronne de cette dent artificielle est réalisée en un matériau renforcé par des fibres de verre et/ou des éléments minéraux, du type polyphénylène-sulfone (PPS) ou polyarylamide (PAA), de préférence chargé, et l'élément radiculaire est réalisé à partir d'un matériau transparent ou translucide du type polyméthacrylate de méthyle (PMMA) ou polycarbonate.

### Brève description des figures

La figure 1 est une vue en coupe d'une demi-dent à deux racines réalisable à l'aide du procédé selon la présente invention;

La figure 2 représente à titre d'exemple un diagramme des différentes étapes mises en oeuvre pour réaliser le procédé selon la présente invention,

La figure 3 représente les différents constituants destinés à la réalisation d'une dent à deux racines, et

La figure 4 représente des parties radiculaires constitutives de l'élément radiculaire destinées à être assemblées pour la réalisation d'une dent à trois racines.

### Description d'une forme d'exécution préférée de l'invention

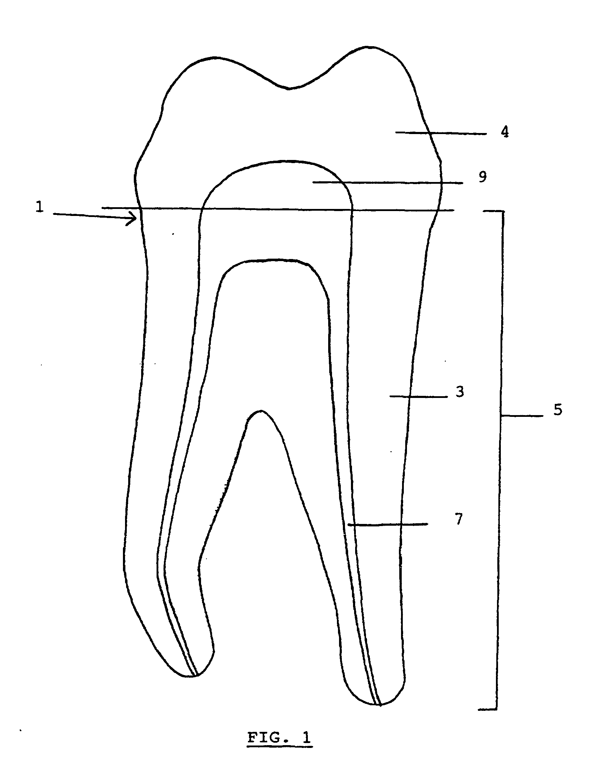

La figure 1 est une vue en coupe d'une demi-dent portant le repère général 1 que l'on souhaite réaliser par le procédé selon la présente invention. Cette demi-dent 1 comprend essentiellement deux constituants différents. Le premier est la couronne 4 qui est réalisée en un matériau qui présente une résistance mécanique et une dureté élevées. Le second constituant est l'élément radiculaire 5, qui comprend dans la version de la figure 1 deux racines 3 et est réalisé de préférence en un matériau transparent afin de permettre la visualisation du travail effectué lors des soins opérés sur lesdites dents.

Dans chacune des racines 3 de l'élément radiculaire est prévu un canal radiculaire 7 relié à une cavité pulpaire 9. Les dimensions des canaux sont équivalentes à celles qui existent dans la réalité, à savoir des diamètres de l'ordre de 50 à 150 µm à l'apex.

La dent artificielle selon l'invention est avantageusement réalisée dans des matériaux dont les caractéristiques mécaniques minimales doivent rencontrer au moins les exigences suivantes pour que les conditions rencontrées dans la réalité soient respectées :
- possibilité d'usinage de la couronne 4 avec une fraise tournant à 120000 tours/minute,
- possibilité d'usinage des canaux radiculaires 7 manuellement ou à l'aide d'une fraise mécanique tournant à 300 tours/minute,
- possibilité d'obturation des canaux radiculaires 7 alésés avec un liant dont la température peut atteindre 85 °C et qui est appliqué par projection à l'aide d'un outil tournant à 5000 tours/minute.

En outre, la dent 1 doit présenter une résistance mécanique suffisante pour pouvoir supporter le forage, filetage et vissage d'un pivot métallique destiné à un montage orthodontique.

D'autre part, il est nécessaire que les formes et dimensions, tant internes qu'externes, des dents artificielles soient aussi proches que possible d'une anatomie réelle des dents naturelles. Ceci doit être vrai pour tous les types de dents (incisives, canines, prémolaires et molaires) et pour tous les types d'anatomie canalaire.

Selon l'invention, on propose donc de réaliser un procédé de fabrication des différents constituants permettant de réaliser ladite dent artificielle par moulage en injection de matière plastique.

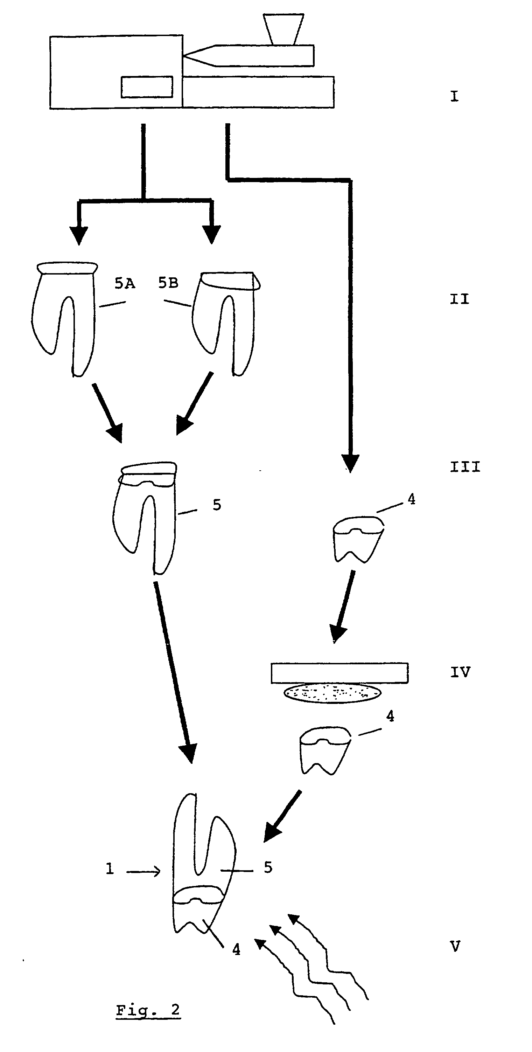

La figure 2 représente un flow sheet des différentes étapes mises en oeuvre pour réaliser le procédé selon la présente invention.

Après la réalisation d'un moule ou d'une partie de moule, on effectue la fabrication de la couronne 4 et des parties radiculaires 5A et 5B de la dent artificielle (voir étape I) par injection classique de différentes matières plastiques dans les moules appropriés.

Une alternative consiste à réaliser au moins une partie radiculaire en formant d'abord par moulage un premier composé (la racine elle-même) muni d'une rainure et en plaçant dans ladite rainure un second composé sous forme de cordon imitant le nerf, ceci de manière simultanée, par la technique de bi-injection.

Ensuite, on réalise l'élément radiculaire 5 (étape III).

Dans le cas de la réalisation d'une dent à une racine (incisive ou canine) ou à deux racines (prémolaire), on réalise deux parties radiculaires 5A, 5B que l'on assemblera ultérieurement selon une surface de jonction (voir étape II) afin de former l'élément radiculaire 5.

Ces deux parties radiculaires 5A, 5B sont assemblées par soudage ultrasons (voir étape III), tandis que la couronne 4 est encollée et positionnée de manière précise sur l'élément radiculaire 5 assemblé (voir étape IV).

Les deux constituants de la dent 1 (couronne 4 + élément radiculaire 5) sont maintenus en contact durant une période de temps déterminée qui permet la polymérisation de ladite colle, par exemple sous UV (voir étape V).

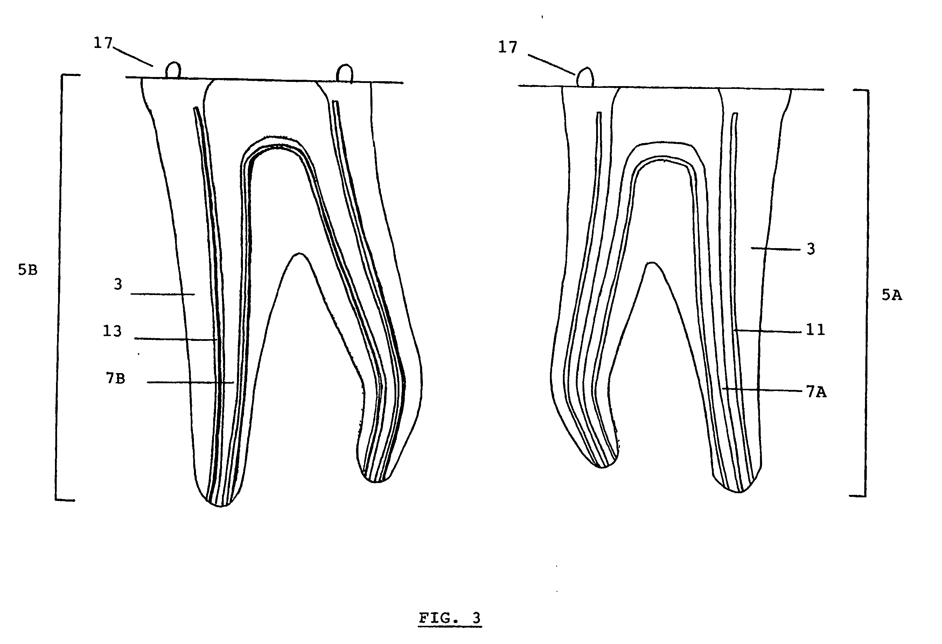

Dans le cas particulier d'une dent à deux racines, telle que représentée à la figure 3, on peut envisager de manière particulièrement avantageuse de réaliser une surface de jonction entre les deux parties radiculaires 5A et 5B se présentant sous la forme d'un seul plan qui comprend des rainures 7A et 7B destinées à réaliser le canal radiculaire 7 de la figure 1. Dans des cas plus complexes, en particulier dans le cas où les canaux ne sont pas situés dans un même plan ou dans le cas d'une dent à trois racines, telle qu'une molaire, il est nécessaire d'envisager la réalisation d'une ou plusieurs surfaces de jonction dans lesquelles se situent les rainures destinées à former le canal radiculaire 1.

De plus, afin de favoriser la solidarisation des parties radiculaires 5 A et 5B de l'élément radiculaire 5, on prévoit de disposer sur au moins une des parties radiculaires 5A un surplus de matière 11 le long de la rainure 7A de part et d'autre de celle-ci, comme l'illustre la figure 3.

Au niveau de la partie radiculaire 5B correspondante qui doit lui faire face, on prévoit une gorge 13 de part et d'autre de la rainure 7B et qui permet d'accueillir le surplus de matière 11. Ce surplus de matière 11 agit comme un directeur d'énergie et facilite la solidarisation efficace lors de l'assemblage des deux parties radiculaires 5A et 5B constitutives de l'élément radiculaire 5.

Cette technique permet également d'assurer une étanchéité améliorée du canal radiculaire formé et accroît bien entendu la résistance mécanique pour éventuellement permettre la pose d'un pivot mécanique sans éclatement.

En outre, on vérifiera lors de l'assemblage que les canaux sont étanches, afin de pouvoir, après usinage, injecter des produits liquides et éventuellement relativement chauds qui sont destinés par exemple à l'obturation et aux soins desdits canaux. A ce stade, un contrôle de la résistance mécanique et de l'aspect des canaux est à nouveau effectué.

En outre, afin de favoriser le positionnement de l'élément radiculaire 5 sur la couronne 4, on peut prévoir la réalisation de petits tétons 17 sur les parties radiculaires 5A et 5B, lesquels vont se placer dans des encoches (non représentées) prévues à cet effet dans la couronne 4.

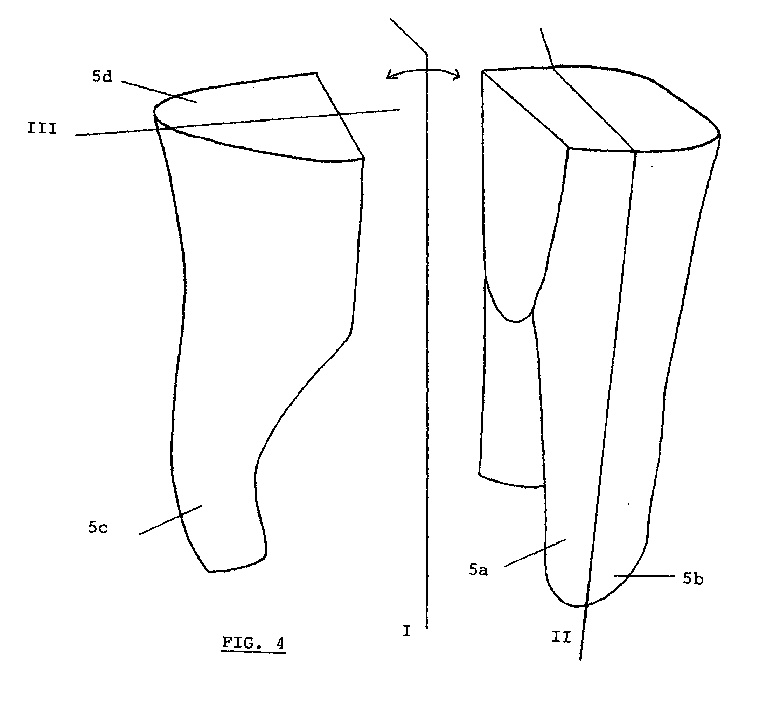

Dans le cas d'une dent à trois racines (molaire), comme l'illustre la figure 4, on réalise d'abord une première et une deuxième parties radiculaires 5A et 5B qui, assemblées, permettent la réalisation de deux racines dont les canaux radiculaires sont positionnés essentiellement dans le plan de jonction II.

La réalisation de la troisième racine est quant à elle effectuée en assemblant une troisième et une quatrième parties radiculaires 5C et 5D le long d'un plan de jonction III dans lequel est également disposé le canal radiculaire correspondant à cette racine. Ensuite, les première et deuxième racines sont assemblées à la troisième racine selon un plan de jonction I éventuellement parallèle au plan de jonction II afin de constituer l'élément radiculaire à trois racines.

Le fait de travailler et de proposer la réalisation des racines en plusieurs parties radiculaires permet de résoudre de manière particulièrement avantageuse le problème de la réalisation des canaux radiculaires qui présentent des courbures qui empêcheraient le moulage en une seule pièce.

La présente invention vise également à proposer une solution qui permet de prévoir non seulement la réalisation de canaux radiculaires principaux qui existent dans des dents réelles, mais également la réalisation de canaux radiculaires secondaires ou ramifications de plus petites dimensions présents également dans les dents réelles.

## Revendications

1. Procédé de réalisation de dents artificielles (1) imitant les dents naturelles, chaque dent comprenant une couronne (4) et un élément radiculaire (5) comprenant une, deux ou trois racines (3), chacune des racines comportant au moins un canal radiculaire (7), ledit procédé comprenant les étapes suivantes :
- réalisation d'une couronne (4) par injection dans un moule d'une matière plastique présentant des caractéristiques élevées de résistance mécanique et de dureté,
- réalisation de l'élément radiculaire (5) par injection dans un moule d'une matière sous la forme d'au moins deux parties radiculaires (5A, 5B; 5C, 5D) présentant au moins une surface de jonction incluant au moins une rainure (7A, 7B) destinée à réaliser un canal radiculaire (7),
- assemblage et solidarisation des différentes parties radiculaires (5A, 5B; 5C, 5D) entre elles en vue d'obtenir l'élément radiculaire (5) de la dent, et
- assemblage et solidarisation de la couronne (4) avec ledit élément radiculaire (5).

2. Procédé selon la revendication 1, **caractérisé en ce que** ledit élément radiculaire est formé d'un matériau présentant des caractéristiques de transparence ou de translucidité à la lumière.

3. Procédé selon la revendication 1 ou 2, **caractérisé en ce que** la surface de jonction des parties radiculaires (5A, 5B; 5C, 5D) est un plan de jonction (II, III) pourvu de rainures qui, lors de l'assemblage des parties radiculaires, forme un ou plusieurs canaux radiculaires.

4. Procédé selon l'une quelconque des revendications 1 à 3, **caractérisé en ce que** la solidarisation des différentes parties radiculaires s'effectue par soudage par émission d'ultrasons ou par soudage par émission de rayonnement laser.

5. Procédé selon l'une quelconque des revendications 1 à 4, **caractérisé en ce que** l'on prévoit sur une partie radiculaire 5A le long de la rainure (7A), un surplus de matière (11) formant un directeur d'énergie et sur l'autre partie radiculaire (5B), une gorge (13) le long de la rainure (7B).

6. Procédé selon l'une quelconque des revendications précédentes, **caractérisé en ce que** la solidarisation de la couronne (4) et de l'élément radiculaire (5) est réalisée par collage, éventuellement accompagné d'une polymérisation par émission d'un rayonnement UV.

7. Dent artificielle (1) imitant une dent naturelle comprenant une couronne (4) et un élément radiculaire (5) composé d'au moins deux parties radiculaires (5A, 5B; 5C, 5D) réalisés selon le procédé de la revendication 1.

8. Dent artificielle selon la revendication 7, **caractérisée en ce que** l'élément radiculaire (5) est réalisé à partir d'un matériau transparent ou translucide à la lumière.

9. Dent artificielle selon la revendication 8, **caractérisée en ce que** l'élément radiculaire (5) est réalisé à partir d'un matériau transparent ou translucide, du type polyméthacrylate de méthyle (PMMA) ou polycarbonate.

10. Dent artificielle selon la revendication 7 ou 8, **caractérisée en ce que** la couronne (4) est réalisée en un matériau renforcé par des fibres de verre et/ou des éléments minéraux, du type polyphénylène-sulfone (PPS) ou polyarylamide (PAA), de préférence chargé.

## Patentansprüche

1. Verfahren zum Herstellen künstlicher Zähne (1), die die natürlichen Zähne nachahmen, wobei jeder Zahn eine Krone (4) und ein Wurzelelement (5) umfasst, welches eine, zwei oder drei Wurzeln (3) umfasst, wobei jede der Wurzeln mindestens einen Wurzelkanal (7) umfasst, wobei das Verfahren die folgenden Schritte umfasst:
- Herstellen einer Krone (4) durch Einspritzen in eine Form aus Kunststoff, die hohe Merkmale mechanischer Festigkeit und Härte aufweist,
- Herstellen des Wurzelelements (5) durch Einspritzen in eine Form eines Stoffs in Form von mindestens zwei Wurzelteilen (5A, 5B; 5C, 5D), die mindestens eine Verbindungsfläche aufweisen, die mindestens eine Rille (7A, 7B) umfasst, die dazu bestimmt ist, einen Wurzelkanal (7) herzustellen,
- Zusammenfügen und festes Verbinden der verschiedenen Wurzelteile (5A, 5B; 5C, 5D) untereinander, um das Wurzelelement (5) des Zahns zu erzielen, und
- Zusammenfügen und festes Verbinden der Krone (4) mit dem Wurzelelement (5).

2. Verfahren nach Anspruch 1, **dadurch gekennzeichnet, dass** das Wurzelelement aus einem Werkstoff gebildet ist, der Merkmale der Durchlässigkeit oder des Durchscheinens für Licht aufweist.

3. Verfahren nach Anspruch 1 oder 2, **dadurch gekennzeichnet, dass** die Verbindungsfläche der Wurzelteile (5A, 5B; 5C, 5D) eine Verbindungsebene (II, III) ist, die mit Rillen versehen ist, die bei dem Zusammenfügen der Wurzelteile einen oder mehrere Wurzelkanäle bilden.

4. Verfahren nach irgendeinem der Ansprüche 1 bis 3, **dadurch gekennzeichnet, dass** das feste Verbinden der verschiedenen Wurzelteile durch Schweißen durch Ultraschallemission oder durch Schweißen durch Laserstrahlungsemission erfolgt.

5. Verfahren nach irgendeinem der Ansprüche 1 bis 4, **dadurch gekennzeichnet, dass** man auf einem Wurzelteil 5A entlang der Rille (7A) einen Überschuss an Stoff (11) vorsieht, der einen Energielenker bildet, und auf dem anderen Wurzelteil (5B) eine Hohlkehle (13) entlang der Rille (7B).

6. Verfahren nach irgendeinem der vorhergehenden Ansprüche, **dadurch gekennzeichnet, dass** das feste Verbinden der Krone (4) und des Wurzelelements (5) durch Kleben, eventuell begleitet von einem Polymerisieren durch Emission von UV-Strahlung durchgeführt wird.

7. Künstlicher Zahn (1), der einen natürlichen Zahn nachahmt, der eine Krone (4) und ein Wurzelelement (5) umfasst, das aus mindestens zwei Wurzelteilen (5A, 5B; 5C, 5D) besteht, die gemäß dem Verfahren nach Anspruch 1 hergestellt sind.

8. Künstlicher Zahn nach Anspruch 7, **dadurch gekennzeichnet, dass** das Wurzelelement (5) ausgehend von einem für Licht durchlässigen oder durchscheinenden Werkstoff hergestellt wird.

9. Künstlicher Zahn nach Anspruch 8, **dadurch gekennzeichnet, dass** das Wurzelelement (5) ausgehend von einem durchlässigen oder durchscheinenden Werkstoff des Typs Polymethylmethacrylat (PMMA) oder Polycarbonat hergestellt wird.

10. Künstlicher Zahn nach Anspruch 7 oder 8, **dadurch gekennzeichnet, dass** die Krone (4) aus einem mit Glasfasern und/oder Mineralelementen verstärkten, vorzugsweise gefüllten, Werkstoff des Typs Polyphenylensulfon (PPS) oder Polyarylamid (PAA) hergestellt wird.

## Claims

1. A process for producing artificial teeth (1) imitating natural teeth, each tooth comprising a crown (4) and a radicular element (5) comprising one, two or three roots (3), each of the roots comprising at least one radicular canal (7), said process comprising the following steps:
- producing a crown (4) by injection in a mould of a plastic presenting high characteristics of mechanical strength and hardness,
- producing the radicular element (5) by injection in a mould of a material in the form of at least two radicular parts (5A, 5B; 5C, 5D) presenting at least a junction area including at least a groove (7A, 7B) intended to produce a radicular canal (7),
- assembling and connecting the different radicular parts (5A, 5B; 5C, 5D) between them in order to obtain the radicular element (5) of the tooth, and
- assembling and connecting the crown (4) with said radicular element (5).

2. The process according to claim 1, **characterised in that** said radicular element is formed with a material presenting characteristics of transparency and translucency to light.

3. The process according to claim 1 or 2, **characterised in that** the junction area of the radicular parts (5A, 5B; 5C, 5D) is a bond line (II, III) supplied with grooves, which, when the radicular parts are being assembled, forms one or several radicular canals.

4. The process according to any of claims 1 to 3, **characterised in that** the connection of the different radicular parts is done through welding by ultrasound emission or welding by laser radiation emission.

5. The process according to any of claims 1 to 4, **characterised in that** an excess of material (11) forming an energy conductor on a radicular part (5A) along the groove (7A) and a flash groove (13) on the other radicular part (5B) along the groove (7B) are provided.

6. The process according to any of the preceding claims, **characterised in that** the connection of the crown (4) and the radicular element (5) is carried out by gluing, possibly with a polymerization by ultraviolet radiation emission.

7. An artificial tooth (1) imitating a natural tooth comprising a crown (4) and a radicular element (5) consisting of at least two radicular parts (5A, 5B; 5C, 5D) produced according to the process of claim 1.

8. The artificial tooth according to claim 7, **characterised in that** the radicular element (5) is produced from a material transparent or translucent to light.

9. The artificial tooth according to claim 8, **characterised in that** the radicular element (5) is produced from a transparent or translucent material, of polymethylmethacrylate (PMMA) or polycarbonate type.

10. The artificial tooth according to claim 7 or 8, **characterised in that** the crown (4) is produced in a material reinforced with glassfibres and/or mineral elements, of polyphenylene sulfone (PPS) or polyarylamide (PAA) type, preferably filled.
